# EUROPÄISCHE PATENTSCHRIFT

(11) **EP 0 512 632 B1**
(45) Veröffentlichungstag und Bekanntmachung des Hinweises auf die Patenterteilung: **31.01.1996**
(21) Anmeldenummer: 92201233.1
(22) Anmeldetag: 04.05.1992
(51) Int. Cl.: C03C 27/02, C22C 27/04, H01J 5/46, H01J 61/36, H01K 1/40

(54) **Stromzuführung**
Lead-in conductor
Conducteur de traversée

(30) Priorität: 06.05.1991 AT 932/91
(43) Veröffentlichungstag der Anmeldung: 11.11.1992
(73) Patentinhaber: PLANSEE Aktiengesellschaft, A-6600 Reutte, Tirol (AT)
(72) Erfinder: Leichtfried, Gerhard, Dipl.-Ing., A-6600 Reutte (AT)
(74) Vertreter: Lohnert, Wolfgang, Dr.

(56) Entgegenhaltungen:
- EP-A- 0 275 580
- AT-B- 386 612
- DE-C- 871 034
- WPIL, Questel Telesystems, Derwent Publications Ltd., London (GB); AN 88-320258 (45)
- WPIL, Questel Telesystems, Derwent Publications Ltd., London (GB); AN 84-285715 (46)
- WPIL, Questel Telesystem, Derwent Publications Ltd., London (GB); AN 84-285680 (46)

## Beschreibung

Die Erfindung betrifft eine Stromzuführung aus einer Molybdänlegierung zum Einschmelzen in Glasgehäuse für Lampen, Röhren und ähnliche Bauteile.

Bei elektrischen Bauteilen, wie Lampen, Röhren und dergleichen, werden Teile wie Glühwendeln oder Elektroden in Glasgehäusen durch elektrischen Stromdurchgang auf hohe Temperaturen erwärmt. Diese Glühwendeln oder Elektroden sind mit Stromzuführungen verbunden, die von außen in das Glasgehäuse eingeführt werden und innerhalb des Glasgehäuses vielfach noch frei zur Unterstützung dieser Teile geführt werden.

Die Einführung in das Glasgehäuse muß in der Regel gasdicht sein. Um die Gasdichtheit zu erreichen wird die Stromzuleitung in das Glasgehäuse eingeschmolzen. Zusätzlich können noch spezielle konstruktive Ausgestaltungen der Stromzuleitung, wie zum Beispiel die Ausführung als dünnes Band, die Einschmelzeigenschaften und die Gasdichtheit verbessern. Da die Stromzuführungen beim Betrieb der Bauteile oder bei der Einschmelzung in das Glasgehäuse hohen Temperaturen ausgesetzt werden, kommen vielfach hochschmelzende Metalle, wie Molybdän oder Molybdänlegierungen, als Materialien für diese Stromzuführungen zum Einsatz. Da die Stromzuführungen je nach Anordnung im Bauteil unterschiedlich mechanisch, thermisch oder anderweitig beansprucht werden, müssen sie vielfach abschnittsweise unterschiedlich geometrisch ausgestaltet sein oder zum Teil auch andere Materialeigenschaften aufweisen. Um dies zu ermöglichen, werden sie daher vielfach nicht einteilig, sondern mehrteilig ausgeführt. Die einzelnen Teile der Stromzuführung sollen dabei miteinander gut verschweißbar sein, da dies die einfachste Verbindung ist, um bei den hohen Temperaturen eine sichere, gut leitfähige Verbindung zu gewährleisten.

Reines Molybdän als Material für die Stromzuführungen hat den Nachteil, daß es bei den für die Einschmelzung in Quarzglas üblichen Temperaturen zwischen etwa 1800 und 2000^{o}C rekristallisiert, so daß es versprödet und mechanisch kaum mehr beanspruchbar ist.

Um diesen Nachteil zu vermeiden, verwendet man vielfach K-Si-gedoptes Molybdän für Stromzuführungen, welches eine wesentlich höhere Rekristallisationstemperatur aufweist und auch im rekristallisierten Zustand duktil bleibt. Nachteilig bei einer derartigen Molybdänlegierung ist, daß sie auf der Oberfläche eine siliziumhaltige Schicht aufweist, die die Schweißeigenschaften des Materials mit sich selbst und mit anderen Materialien stark verschlechtert.

Aus der EP-PS 0 275 580 ist eine Molybdänlegierung aus 0,01 - 2 Gew.% Yttriumtrioxid, 0,01 - 0,8 Gew.% Molybdänborid, Rest Molybdän für Stromzuführungen beschrieben. Diese Legierung weist zwar gegenüber reinem Molybdän ebenfalls eine erhöhte Rekristallisationstemperatur und verbesserte Hochtemperatur-Eigenschaften auf. Der Nachteil besteht jedoch darin, daß Bor einen sehr hohen Einfangquerschnitt für thermische Neutronen aufweist. Dieses Element ist in Molybdän-Fertigungsbetrieben daher äußerst unerwünscht, da die Verunreinigung von Molybdänlegierungen mit diesem Element für Anwendungen, wo sie mit radioaktivem Material in Kontakt kommen, äußerst nachteilig ist.

Die DE-PS 871 034 beschreibt eine Stromleiter-Einschmelzung für Gefäße aus Quarzglas oder ähnliche hochschmelzende Gläser, bei der Molybdän- oder Wolframlegierungen verwendet werden, die allgemein schwer verdampfbare Metalloxide in fein verteilter Form zur Erhöhung der Rekristallisationstemperatur enthalten. Als besonders geeignete Oxide sind Alkalioxide, Thoriumoxid, Zirkonoxid, Hafniumoxid, Kieselsäure und Aluminiumoxid mit Anteilen von 0,01 - 2,5 % genannt. Ein Hinweis dahingehend, daß die Oxide der Lanthaniden mit einem Anteil bis zu 5 Gew.% ebenfalls geeignet sind, ist dieser Veröffentlichung nicht zu entnehmen.

Die AT-PS 286 612 beschreibt Legierungen der hochschmelzenden Metalle Mo, W, Nb, Ta, V, Cr mit Stapelfaserstruktur, die verbesserte Hochtemperatur-Eigenschaften aufweisen. Als besonders vorteilhaft sind dabei unter anderem die Legierungen dieser Metalle mit 1 - 5 Gew.% der Oxide der Lanthaniden La, Ce, Er, Pr genannt. Daß speziell Molybdänlegierungen mit diesen Zusätzen eine verbesserte Schweißbarkeit aufweisen oder aber speziell für die Verwendung als Stromzuführung geeignet sind, ist aus dieser Veröffentlichung nicht zu ersehen.

Die JP 59-177305 beschreibt eine Molybdänlegierung mit 1 - 5 Gew.% Lanthanoxid. In dieser Veröffentlichung wird auf die vorteilhafte Verwendung dieser Legierung für Kathoden für Elektronenröhren hingewiesen. Eine besonders gute Verschweißbarkeit der Legierung mit sich selbst oder mit reinem Molybdän oder anderen Molybdänlegierungen oder über die Verwendung für Stromzuführungen ist auch dieser Veröffentlichung nicht zu entnehmen.

Die Aufgabe der vorliegenden Erfindung besteht daher darin, eine Stromzuführung zu schaffen, die zum Einschmelzen in Glasgehäuse geeignet ist und die darüberhinaus gut mit sich selbst und reinem Molybdän oder anderen Molybdänlegierungen verschweißbar ist.

Erfindungsgemäß wird das durch die Verwendung einer Molybdänlegierung gelöst, die neben üblichen Verunreinigungen zu 0,01 - 5 Gew.% aus einem oder mehreren Oxiden der Lanthaniden, Rest Molybdän besteht.

Die Molybdänlegierung weist aufgrund ihrer speziellen Hochtemperatureigenschaften eine hohe Duktilität im fertigen Bauteil auf, da beim Einschmelzen in das Glasgehäuse auch bei den hohen, für Einschmelzungen im Quarzglas notwendigen Temperaturen von 1800 - 2000^{o} keine Rekristallisation auftritt. Die erforderliche Gasdichtheit der Einschmelzung ist bei Verwendung dieser Legierung gewährleistet.

Die Legierung läßt sich auch hervorragend zu Draht und Band verarbeiten, da sich die Oxide der Lanthaniden im Gegensatz zu anderen oxidischen Dispersoiden, wie zum Beispiel Y₂O₃, mitverformen.

Entscheidend für die hervorragende Eignung der Legierung für die erfindungsgemäße Verwendung sind vor allem die hervorragenden und in diesem Ausmaß nicht zu erwartenden guten Schweißeigenschaften der Legierung mit sich selbst sowie mit reinem Molybdän und mit K-Si-gedopten Molybdänlegierungen. Dies bewirkt eine wesentliche Qualitätssteigerung bei den Stromzuführungen, die - wie schon eingangs ausgeführt - vielfach mehrteilig unter Verwendung unterschiedlicher Materialien ausgeführt sind.

Als besonders vorteilhaft hat es sich herausgestellt, wenn die Anteile der Oxide 0,1 - 1 Gew.% betragen.

Als besonders geeignetes Oxid hat sich Lanthanoxid bewährt.

Im folgenden wird die Erfindung anhand von Beispielen näher erläutert.

### BEISPIEL 1

Lanthanhydroxid in einer Menge entsprechend 0,7 Gew.% La₂O₃ in Mo-Metallpulver mit einer Korngröße nach Fisher von 0,2µm wurde mit Mo-Metallpulver mit einer Korngröße von 3,5µm vermischt, isostatisch zu einem Stab verdichtet und bei 1800^{o}C, 5 Stunden in H₂ auf eine Dichte von 9,75 g/cm³ gesintert. Der Stab wurde durch Walzen, Hämmern und Ziehen in mehreren Stufen auf einen Enddurchmesser von 0,60 mm verformt. Der Gesamtumformgrad betrug 99,98 %.
Der so hergestellte Draht wurde ebenso wie Draht gleichen Durchmessers aus reinem Molybdän sowie aus Kaliumsilikat gedoptem Molybdän zur Durchführung von Schweißversuchen mit Bandmaterial von 0,033 mm Stärke und 2,15 mm Breite aus reinem Molybdän, aus Kaliumsilikat gedoptem Molybdän und aus Molybdän mit 0,7 % Lanthanoxid verschweißt. Die Herstellung des Bandmaterials erfolgte durch Pressen des Ausgangspulvers auf einer Matrizenpresse mit einem Preßdruck von 2 t/cm² zu Platten. Die Platten wurden ebenfalls bei 1800^{o}C, 5 Stunden in H₂ gesintert. Nach dem Sintern wurden die Platten durch Walzen mit einem Gesamtumformgrad von 99,9 % auf eine Stärke von 0,033 mm gewalzt und auf eine Breite von 2,15 mm zugeschnitten.
Abschließend erfolgte eine Glühbehandlung bei 1200^{o}C während 1 Stunde um Spannungen abzubauen.
Die Schweißungen erfolgten mittels einer Punktschweißmaschine mit Gleichstromsteuerung bei folgenden Schweißparametern:

| | |
|---|---|
| Anpreßkraft: | 3 daN |
| Leistung: | 1600 W |
| Strom: | 890 A |
| Zeit: | 1/4/1 ms |

Zur Ermittlung der Qualität der einzelnen Schweißverbindungen wurde die Abzugskraft zwischen Draht- und Bandmaterial gemessen.

| Verbund | | Abzugskraft in N *) gemessen im Zugversuch |
|---|---|---|
| Draht | Band | |
| Mo | Mo | 23,8 |
| Mo mit Kaliumsilikat gedopt | Mo mit Kaliumsilikat gedopt | 27,5 |
| Mo mit Kaliumsilikat gedopt | Mo | 7,0 |
| Mo-0,7La₂O₃ | Mo-0,7La₂O₃ | 39,5 |
| Mo | Mo-0,7La₂O₃ | 29,9 |
| Mo mit Kaliumsilikat gedopt | Mo-0,7La₂O₃ | 32,5 |

| | | |
|---|---|---|
| *) ... Mittelwert aus 10 Messungen | | |

### BEISPIEL 2

120 g Nd (NO₃) 6 H₂O wurden in 1000 ml destilliertem H₂O aufgelöst und eine Menge entsprechend 0,7 Gew.% Nd₂O₃ in Mo-Metallpulver mit einer Korngröße von 3,8µm eingedüst.
Nach der Trocknung wurde das Pulver, wie in Beispiel 1 beschrieben, gepreßt und gesintert. Die Sinterdichte betrug 9,72 g/cm³. Die Verformung zu Drähten erfolgte wie bei Mo-0,7%La₂O₃. So hergestellte Drähte mit 0,6 mm Durchmesser wurden mit Mo-0,7%Nd₂O₃-Folien, von 0,035 mm Stärke, 2,5 mm Breite und 30 mm Länge, die analog hergestellt wurden, verschweißt (Bedingungen wie bei Beispiel 1). Auch in diesem Fall wurde die Abzugskraft mittels Zugversuch ermittelt. Sie betrug 33,8 N (Mittelwert aus 10 Messungen).

Die Beispiele belegen eindrucksvoll, daß Molybdänlegierungen mit Oxiden der Lanthaniden gegenüber reinem Molybdän und K-Si-dotiertem Molybdän wesentlich verbesserte Schweißfähigkeit aufweisen, die die vorteilhafte erfindungsgemäße Verwendung dieser Legierungen ermöglicht.

## Patentansprüche

1. Verwendung einer Molybdän-Legierung, die neben üblichen Verunreinigungen zu 0,01 - 5 Gew.% aus einem oder mehreren Oxiden der Lanthaniden, Rest Molybdän, besteht, als Stromzuführung für Lampen, Elektronenröhren und ähnliche Bauteile, die in Glasgehäuse eingeschmolzen und vorzugsweise mit anderen metallischen Lampenbauteilen verschweißt werden.

2. Verwendung einer Molybdän-Legierung mit 0,1 - 1 Gew.% Oxidanteil als Stromzuführung nach Anspruch 1.

3. Verwendung einer Molybdän-Legierung mit einem La₂O₃-Anteil als Stromzuführung nach Anspruch 1 oder 2.

## Claims

1. Use of a molybdenum alloy, which apart from the usual impurities consists of 0.01 - 5 % by weight of one or more oxides of the lanthanides and the remainder molybdenum, as a lead-in conductor for lamps, electron tubes and similar components which are sealed in glass vessels and are preferably welded to other metal lamp components.

2. Use of a molybdenum alloy containing 0.1 - 1 % by weight oxide as a lead-in conductor according to claim 1.

3. Use of a molybdenum alloy containing La₂O₃ as a lead-in conductor according to claim 1 or 2.

## Revendications

1. Utilisation d'un alliage de molybdène, qui se compose, en plus des impuretés habituelles, de 0,01 à 5% en poids d'un ou plusieurs oxydes de lanthanides, et de molybdène pour le reste,
pour servir de conducteur de traversée destiné à des lampes, des tubes électroniques et composants similaires, qui est scellé dans une enveloppe de verre et de préférence soudé à d'autres composants métalliques de lampes.

2. Utilisation d'un alliage de molybdène à teneur en oxydes de 0,1 à 1% en poids comme conducteur de traversée selon la revendication 1.

3. Utilisation d'un alliage de molybdène contenant du La₂O₃ comme conducteur de traversée selon la revendication 1 ou 2.
